# EUROPÄISCHE PATENTANMELDUNG

(11) **EP 3 199 122 A1**
(43) Veröffentlichungstag der Anmeldung: **02.08.2017**
(21) Anmeldenummer: 17152029.9
(22) Anmeldetag: 18.01.2017
(51) Int. Cl.: A61C 5/20, A61C 13/00, A61C 13/107

(54) **ZAHNLEISTEN-VENEER UND VERFAHREN ZU DESSEN HERSTELLUNG**

(30) Priorität: 26.01.2016 DE 102016101376
(71) Anmelder: K Line Europe GmbH, 40474 Düsseldorf (DE)
(72) Erfinder: Kandil, Dr. Sherif, 40489 Düsseldorf (DE)
(74) Vertreter: Kalkoff & Partner

(57) **Zusammenfassung**

Die Erfindung betrifft ein Zahnleisten-Veneer aus thermoplastischem Kunststoff. Um auf einfache Weise mehrere Zähne abdecken zu können, ist vorgesehen, dass das Zahnleisten-Veneer eine Folge von mindestens zwei Einzel-Veneers aufweist, die jeweils die labiale Fläche eines einzelnen Zahns abdecken. Weiter betrifft die Erfindung ein Verfahren zum Befestigen eines Veneers auf dem Zahn und ein Verfahren zum Herstellen eines Veneers.

## Beschreibung

Die Erfindung betrifft ein Verfahren zum Herstellen eines Zahn-Veneers, ein Zahnleisten-Veneer und ein Verfahren zum Befestigen eines Zahn-Veneers.

Ein Veneer wird benutzt, um unansehnliche Zähne zeitweilig abzudecken. Es handelt sich um ein kosmetisches Produkt, mit dem zeitweilig das Erscheinungsbild eines Zahns ästhetisch verbessert wird. Um möglichst wenig Material in dem Mundraum eines Nutzers einzubringen, wird bevorzugt nur die labiale Fläche eines Zahns abgedeckt, so wie z. B. in der US 2007/0298381 A1 beschrieben. In diesem Dokument wird ein Einzel-Veneer beschrieben, dass auf die labiale Fläche eines einzelnen Zahns aufgeklebt wird. Für mehrere Zähne wird in diesem Dokument dagegen eine die Zähne umschließende Schiene vorgeschlagen.

Nachteilig an dieser Lösung ist, dass wenn mehrere Zähne abzudecken sind, das Aufbringen von mehreren Einzel-Veneers aufwändig ist. Zudem strapaziert die Verwendung von Klebstoff die Zähne, insbesondere bei wiederholter Anbringung von Veneers. Außerdem erfordert das Verwenden von Klebstoff meist das Anbringen des Veneers in einer Arztpraxis weil Klebstoff in der Regel das Zahnfleisch angreift und damit nur von Experten verwendet werden sollte.

Diese Aufgabe wird gelöst mit einem Zahnleisten-Veneer nach Anspruch 1, einem Verfahren zum Befestigen nach Anspruch 3 und mit einem Verfahren zum Herstellen nach Anspruch 6.

Das erfindungsgemäße Zahnleisten-Veneer ist aus thermoplastischem Kunststoff hergestellt und es ist dadurch gekennzeichnet, dass das Zahnleisten-Veneer eine Folge von mindestens zwei miteinander verbundenen Einzel-Veneers aufweist, die jeweils die labiale Fläche eines einzelnen Zahns abdecken. Es hat sich herausgestellt, dass zwei oder mehr Zähne nicht aufwändig durch Einzel-Veneers abgedeckt werden müssen, sondern dass ein Zahnleisten-Veneer, das eine Folge von mindestens zwei miteinander verbundenen Einzel-Veneers aufweist, eine schonende und zahnverträgliche Lösung ist, mit der in einem Schritt auch der gesamten Zahnleiste ein ästhetisch besseres Aussehen verliehen werden kann. Es ist möglich, die Zahnleiste eines Kiefers, insbesondere eines Oberkiefers so abzuformen, dass mittels des Abdrucks des Kiefers ein Zahnleisten-Veneer herstellbar ist, das zwei oder mehr Zähne umfasst, deren labiale Fläche abzudecken ist. Vorteilhaft ist es möglich, ein Zahnleisten-Veneer herzustellen, das sämtliche Zähne beim Sprechen oder Lächeln eines Kiefers sichtbare Zähne abdeckt.

Das Zahnleisten-Veneer deckt erfindungsgemäß die labiale Fläche eines Zahns ab. Das Zahnleisten-Veneer grenzt vorzugsweise an das Zahnfleisch an und erstreckt sich bis zum freien Ende des Zahns. Dadurch, dass das Zahnleisten-Veneer das Zahnfleisch nicht abdeckt, wird eine Reizung des Zahnfleisches zuverlässig vermieden. Da das Zahnleisten-Veneer ein ästhetisch ansprechendes Zahnbild vermitteln soll, kann es sein, dass sich ein Veneer über das freie Ende des Zahns hinaus erstreckt, z. B. wenn der abzudeckende Zahn zu kurz ist. Das erfindungsgemäße Veneer deckt jedoch nicht die Schneidkante oder Kaufläche des Zahns oder die orale Fläche des abzudeckenden Zahns ab. Das erfindungsgemäße Zahnleisten-Veneer ist insbesondere ausschließlich auf die labiale Fläche des Zahns begrenzt. Dadurch, dass ausschließlich die labiale Fläche des Zahns abgedeckt wird, empfindet der Nutzer während des Gebrauchs des Veneers kaum eine Störung in der Mundhöhle. Auch die Sprache wird nicht beeinträchtigt, insbesondere deshalb nicht, weil das erfindungsgemäße Zahnleisten-Veneer sich nicht über die Schneidkante oder Kaufläche in den Mundraum erstreckt.

Das Zahnleisten-Veneer deckt mindestens zwei nebeneinander liegende Zähne ab. Dabei ist das Zahnleisten-Veneer so ausgebildet, dass jede einzelne labiale Zahnfläche als Einzel-Veneer ausgebildet ist. Die Einzel-Veneers sind an den Seitenkanten miteinander verbunden, so dass ein einzelnes Zahnleisten-Veneer entsteht, das entweder den Oberkiefer oder den Unterkiefer abdeckt. Die Verbindung der Einzel-Veneers an den Seitenkanten wird vorzugsweise so kurz wie möglich gehalten, um einen natürlichen Eindruck des Zahnbildes zu vermitteln. Nach einer vorteilhaften Weiterbildung der Erfindung ist der Bereich der Seitenkante zwischen zwei Einzel-Veneers dünner ausgebildet als die labiale Fläche eines Einzel-Veneers. Nach einer bevorzugten Ausführung ist das Zahnleisten-Veneer so vorgeformt, dass es den natürlichen Bogen der Zahnleiste annähernd nachbildet. Bei einem solchen bogenförmigen Zahnleisten-Veneer ist das Einsetzen besonders einfach.

Ein Einzel-Veneer des Zahnleisten-Veneers, das einen einzelnen Zahn abdeckt, ist meist in etwa an die Breite des abzudeckenden Zahns angepasst. Das erfindungsgemäße Zahnleisten-Veneer bietet nach einer vorteilhaften Weiterbildung die Möglichkeit, das Einzel-Veneer, bezogen auf den jeweils abzudeckenden Zahn, sowohl breiter als auch schmaler auszubilden. Damit kann gerade mit dem Zahnleisten-Veneer durch die Folge von miteinander an den Seitenkanten verbundenen Einzel-Veneers wesentlich besser ein gleichmäßiges Zahnbild gewährleistet werden. Zahnlücken können überdeckt werden und unterschiedlich breite Zähne können durch das Zahnleisten-Veneer ein gleichmäßigeres Bild erhalten. Dies ist mit Einzel-Veneers nicht möglich.

Das Zahnleisten-Veneer ist aus thermoplastischem Kunststoff hergestellt. Typisch wird das Zahnleisten-Veneer aus einem Co-Polyester hergestellt, z. B. aus Polyethylenterephtalat (PET), insbesondere aus einem mit Glykol modifizierten PET, kurz PETG. Typische, in der Praxis verfügbare Werkstoffe sind z. B. Erkodur® in verschiedenen Farbstellungen A1, A2 oder A3, alternativ auch DURAN®+. Diese zahnfarbenen Werkstoffe werden derzeit z. B. für Provisorien oder Aufbeißschienen verwendet.

Das Zahnleisten-Veneer kann entweder aus einer Folie tiefgezogen werden oder es kann in eine Spritzgussform eingespritzt werden, um das Zahnleisten-Veneers herzustellen. Alternativ kann das Zahnleisten-Veneer nach einer digitalisierten Vorlage auch mittels eines 3-D-Druckers hergestellt werden.

Das Zahnleisten-Veneer weist üblicherweise eine Dicke von 0,1 mm bis 2 mm auf. Typisch ist eine Dicke zwischen 0,2 mm und 2 mm. Die Dicke des Zahnleisten-Veneers kann vorteilhaft in Abhängigkeit von der zu korrigierenden Zahnstellung gewählt werden. Insbesondere bei schief stehenden, nach innen geneigten Zähnen kann durch das Verwenden von dickerem Material von z. B. 0,8 mm bis 2 mm Dicke ein ästhetisch besonders ansprechendes Zahnbild zu gewährleisten, weil mit dickerem Material eine Neigung der Zähne besonders gut korrigiert werden kann. Das Zahnleisten-Veneer kann nach einer vorteilhaften Weiterbildung abschnittsweise auch eine unterschiedliche Wandstärke aufweisen. Beispielsweise kann das Veneer in der Mitte einer labialen Fläche dünner sein als am Rand. Auch der Bereich der Seitenkanten zwischen zwei Einzel-Veneers, die jeweils einen Zahn auf seiner labialen Fläche abdecken, kann dünner ausgebildet sein als z. B. der angrenzende Randbereich einer labialen Fläche.

Das thermoplastische Material ist geeignet, das Zahnleisten-Veneer mehrfach verwendbar zu machen. Es kann Wochen oder Monate verwendet werden. Weiter ist das Zahnleisten-Veneer dazu geeignet, es im Alltag zu tragen, also mit dem Zahnleisten-Veneer zu sprechen, zu essen oder zu trinken.

Das erfindungsgemäße Verfahren zum Herstellen eines Zahnleisten-Veneers weist die Schritte auf des Erstellens einer standardisierten oder individuellen Vorlage für ein Zahnleisten-Veneer, des Herstellens einer Form für das Zahnleisten-Veneer durch Abformen der Vorlage oder Digitalisieren der Vorlage sowie des Formens des Zahnleisten-Veneers nach der Form oder Drucken des Zahnleisten-Veneers (2) mit einem 3-D-Drucker.

Das Zahnleisten-Veneer als kosmetisches Produkt wird als individuelles Zahnleisten-Veneer hergestellt, indem eine Vorlage in Form eines Abdrucks der mit dem Zahnleisten-Veneer abzudeckenden Zähne genommen wird, oder indem für ein standardisiertes Zahnleisten-Veneer ein standardisiertes Zahnbild als Vorlage hergestellt wird, das vom Nutzer oder einem Experten dann individuell angepasst wird. Vorzugsweise wird dem zukünftigen Nutzer eines individuell hergestellten Zahnleisten-Veneers eine Verpackungseinheit, auch als Kit bezeichnet, also eine vorgefertigte Zusammenstellung einer Abdruckform und Abdruckmasse zur Verfügung gestellt, die ggf. zusammen mit einer Anweisung zur Nutzung übermittelt wird. Der Nutzer erstellt selbst einen Abdruck, ggf. ergänzt durch Fotos und sendet den Abdruck sowie ggf. die Fotos an den Hersteller des Zahnleisten-Veneers. Zweckmäßig ergänzt wird das Kit durch den Hinweis des Herstellers, dass der Nutzer auch Kommentare an den Hersteller übermittelt, insbesondere Hinweise zum gewünschten späteren Aussehen des Zahnleisten-Veneers, was z. B. das Korrigieren von bestimmten Zahnfehlstellungen, Lücken oder anderen Besonderheiten des Zahnbildes des Nutzers betrifft. Ein Abdruck des Bisses muss nicht erstellt werden, weil das Zahnleisten-Veneer nur die labiale Fläche des Zahns bedeckt. Es ist aber selbstverständlich auch möglich, auf konventionelle Weise durch Abnehmen eines Abdrucks beim Zahnarzt das erfindungsgemäße Zahnleisten-Veneer herzustellen.

Vom individuellen Abdruck wird eine Form gefertigt. Die Form wird ggf., insbesondere wenn fehlgeformte Zähne abzudecken sind, so bearbeitet und damit verändert, dass der bearbeitete Abdruck das individuell gewünschte, optimierte Zahnbild zeigt. Auch andere Formgebungen wie z. b. abschnittsweise dünner oder dicker ausgeführte Wände können bei der Herstellung der Form berücksichtigt und eingearbeitet werden. Das Bearbeiten der Form geschieht z. B. durch Auftragen von Material wie z. B. Wachs, so dass das gewünschte Zahnbild aufgebaut wird. Von der Form wird -in der Regel beim Herstellerauf an sich bekannte Weise die individuellen Zahnleiste erstellt. Alternativ zum manuellen Optimieren der Form kann der Abdruck auch digital erfasst und optimiert werden, insbesondere dann, wenn entweder eine optimierte Form oder das Zahnleisten-Veneer mittels 3-D-Drucktechnik erstellt wird.

Die Form wird z. B. zur Vorlage einer Spritzgussform oder für das Tiefziehen der erfindungsgemäßen Zahnleiste eingesetzt. Durch Spritzgießen oder Tiefziehen wird dann das Zahnleisten-Veneer hergestellt. Alternativ wird in Digitaltechnik, z. B. durch Simulationssoftware und Herstellung, z. B. mit 3-D-Druckern ein erfindungsgemäßes Zahnleisten-Veneer hergestellt.

Das Herstellen des Zahnleisten-Veneers kann aber nach einer eigenständigen erfinderischen Idee auch auf der Basis einer standardisierten Vorlage, einer wie üblich hergestellten Form oder einer digitalen Vorlage, erstellt werden. Nach einer bevorzugten Ausführung wird das standardisierte Zahnleisten-Veneer in mehreren Größen angeboten. Es wird weiter bevorzugt, wenn sich die Größen des Zahnleisten-Veneers nach Maßen richten, die der Nutzer selbst oder ein Experte einfach erfassen können. Typische Maße sind die Breite der Schneidezähne oder der Abstand der Eckzähne voneinander. Die verschiedenen Bereiche für z. B. kleine, mittlere oder Große Breiten oder Abstände sind dann z. B. auf der Verpackung des standardisierten Zahnleisten-Veneers angegeben. Das standardisierte Zahnleisten-Veneer wird bevorzugt als Verpackungseinheit zusammen mit einem Werkzeug zum bearbeiten des Zahnleisten-Veneers angeboten. Vorteilhaft enthält die Verpackungseinheit auch Haftmittel, um das Zahnleisten-Veneer auf die labiale Zahnfläche aufzubringen.

Das Zahnleisten-Veneer wird vom Hersteller ggf. durch Feilen, Schneiden, Schleifen oder Polieren mit an sich bekannten Maßnahmen endbearbeitet. Z. B. werden die Kanten des Zahnleisten-Veneers durch Feilen, Schleifen oder Polieren feinbearbeitet. Die Oberfläche kann insbesondere durch Polieren feinbearbeitet werden. Auch ein Nachbearbeiten vom Nutzer oder von einem Experten zur weiter verbesserten Anpassung des Zahnleisten-Veneers ist möglich. Das standardisierte Zahnleisten-Veneer wird bevorzugt vom Nutzer angepasst. Das standardisierte Zahnleisten-Veneer wird daher vorteilhaft in einer Verpackungseinheit zusammen mit einer Feile als Werkzeug zum Anpassen der Konturen der Einzel-Veneers sowie ggf. mit Hinweisen des Herstellers angeboten, wie das standardisierte Zahnleisten-Veneer am besten angepasst werden kann. Das Zahnleisten-Veneer als kosmetisches Produkt kann also ohne Mitwirkung von Dental-Fachpersonal hergestellt, angepasst und eingesetzt werden.

Im Zusammenhang mit dieser Erfindung wird ein Verfahren zum Befestigen eines Veneers vorgeschlagen. Dieses Verfahren zum Befestigen eines Veneers wird als eigenständige erfinderische Leistung angesehen. Das erfindungsgemäße Verfahren ist sowohl zum Befestigen eines Einzel-Veneers geeignet als auch zum Befestigen eines erfindungsgemäßen Zahnleisten-Veneers. Das Befestigen des Veneers erfolgt erfindungsgemäß mittels eines Haftmittels, also mit einem Mittel, dass nicht klebend wirkt. Üblicherweise wird das Haftmittel als Haftcreme oder Haftgel angeboten. Das Haftgel kann z. B. Vinylacetatpolymer aufweisen. Eine Haftcreme kann übliche Creme-Grundstoffe wie z. B. Paraffin, Petrolatum, Carboxymethylcellulose oder andere Cellulosederivate, Emulgatoren oder Vaseline aufweisen. Weiter kann eine Haftcreme z. B. Calcium oder Zink, aber auch ein Copolymer, z. B. Methylvinylether mit Maleinsäureanhydrid oder Polyvinylacetat oder andere haftend wirkende Polymere aufweisen. Bekannte Haftmittel werden zur unterstützenden Befestigung von Zahnersatz angeboten. Sie stellen Haftung zwischen einem Zahnersatz und dem Zahnfleisch her. Die Verwendung eines Haftmittels zur Befestigung eines kosmetischen Produkts auf der Zahnoberfläche ist bisher nicht bekannt. Die Verwendung eines Haftmittels zur Befestigung eines Veneers auf der labialen Fläche eines oder mehrerer Zähne ist neu und bisher nicht vorbekannt.

Das Haftmittel wird auf den Zahn oder das Veneer aufgetragen, anschließend wird das Veneer aufgedrückt. Der exakte Wirkmechanismus des Haftmittels ist nicht bekannt. Es kann sein, dass das Haftmittel entlang der Kanten des Veneers versiegelnd wirkt, und dass ein -wenn auch kleines- Vakuum zwischen Zahn und Veneer aufgebaut wird, wodurch das Veneer zeitweilige am Zahn fixiert wird. Es ist aber auch nicht ausgeschlossen, dass das Haftmittel, ggf. auch im Zusammenwirken mit Luftsauerstoff oder Speichel eine Matrix bildet, die das Anhaften des Veneers am Zahn gewährleistet.

Es wird im Zusammenhang mit dem erfindungsgemäßen Verfahren zum Befestigen des Zahnleisten-Veneers daher bevorzugt, wenn die labiale Seite oder Außenseite des Zahnleisten-Veneers und die Rückseite des Zahnleisten-Veneers nicht über die gesamte labiale Fläche den gleichen Abstand voneinander aufweisen. Insbesondere in der Mitte der labialen Fläche kann das Veneer dünner ausgebildet sein. Dadurch wird die Bildung eines kleinen Hohlraums auf der Rückseite des Zahnleisten-Veneers gefördert, wo das Zahnleisten-Veneer nicht an der labialen Fläche des abzudeckenden Zahns anliegt. Angrenzend an den Hohlraum ist die Dicke des Veneers größer als im Bereich des Hohlraums. Der Hohlraum kann so groß gewählt werden, dass trotz Hohlraum noch ein sicheres Tragen des Zahnleisten-Veneers gewährleistet ist, typisch beträgt die Fläche des Hohlraums 1% bis zu 30% der Fläche eines einzelnen Veneers. Die Tiefe des Hohlraums kann wenige hundertstel Millimeter bis mehrere zehntel Millimeter betragen. Die Tiefe des Hohlraums kann z. B. 0,3 mm bis 0,7 mm betragen. Die maximale und die minimale Tiefe des Hohlraums ist z. B. abhängig vom Herstellungsverfahren und der Dicke des Veneers. Zum Rand der abzudeckenden labialen Fläche kann die Dicke des Veneers dann wieder abnehmen. In Verbindung mit der Verwendung von Haftcreme fördert diese Ausbildung der einzelnen Veneers den sicheren Sitz des Zahnleisten-Veneers.

Der Vorteil der Verwendung von Haftmittel liegt insbesondere darin, dass eine Reizung des Zahnfleisches ausgeschlossen ist, weil das Haftmittel -anders als Kleber, die im Bereich der Zahntechnik bzw. Zahnheilkunde verwendet werden- das Zahnfleisch nicht reizt. Der weitere Vorteil von Haftcreme liegt darin, dass das Veneer einfach durch Abheben oder Abschieben vom Zahn entfernt werden kann. Es sind keine mechanischen, chemischen oder sonstigen Hilfsmittel zum Lösen des Veneers erforderlich. Das Haftmittel gewährleistet eine sichere Befestigung des Veneers, gerade dann, wenn ein Hohlraum zwischen Veneer und Zahnoberfläche besteht. Außerdem sind eventuell verbleibende Haftcreme-Reste einfach und zahnschonend mit warmem Wasser oder im Rahmen der Zahnreinigung mit einer Zahnbürste und ggf. mit Hilfe von Zahnpasta zu entfernen.

Das Veneer, besonders das erfindungsgemäße Zahnleisten-Veneer, kann über Stunden oder über den gesamten Tag getragen werden. Es kann auch länger getragen werden, es wird aber empfohlen, eine regelmäßige Zahnreinigung durchzuführen und für die Zahnreinigung muss das Veneer abgenommen werden. Dabei erweist sich nochmals von Vorteil, dass das Abnehmen des Veneers, sofern es mit Haftmittel befestigt wird, einfach und zahnschonend erfolgt.

Weiter kann das Einsetzen des Veneers ohne Hilfsmittel wie z. B. eine LTV-Quelle zum Härten von Klebstoff erfolgen. Vielmehr erfolgt das Einsetzen des Veneers durch den Nutzer auf besonders einfache Weise mit Haftcreme und ohne weitere Hilfsmittel.

Nach einer weiter bevorzugten Ausführung wird ein Veneer bereitgestellt, dessen zum Zahn gewandte Seite, also die Rückseite, vom Hersteller mit Haftmittel beschichtet ist, und das ggf. bis zum Gebrauch versiegelt ist, z. B. durch Abdecken mit einer Folie oder einem Papier oder durch Aufbringen einer Versiegelungsschicht, z. B. einer dünnen Wachsschicht. Nach Entfernen der Versiegelung ist das Veneer unmittelbar gebrauchsfertig.

Es wird ausdrücklich angemerkt, dass die vorliegende Erfindung vielseitig modifiziert werden kann, und dass einzelne oder mehrere hier beschriebene Merkmale frei miteinander kombiniert werden können.

Details der Erfindung werden nachfolgend an Hand von Ausführungsbeispielen näher erläutert. Es zeigen:
- Fig. 1: eine schematische Darstellung eines erfindungsgemäßen Zahnleisten-Veneers
- Fig. 2: eine schematische Darstellung eines auf eine Zahnleiste aufgebrachten Zahnleisten-Veneers
- Fig. 3: eine schematische Darstellung eines Schnitts durch ein erfindungsgemäßes Zahnleisten-Veneer

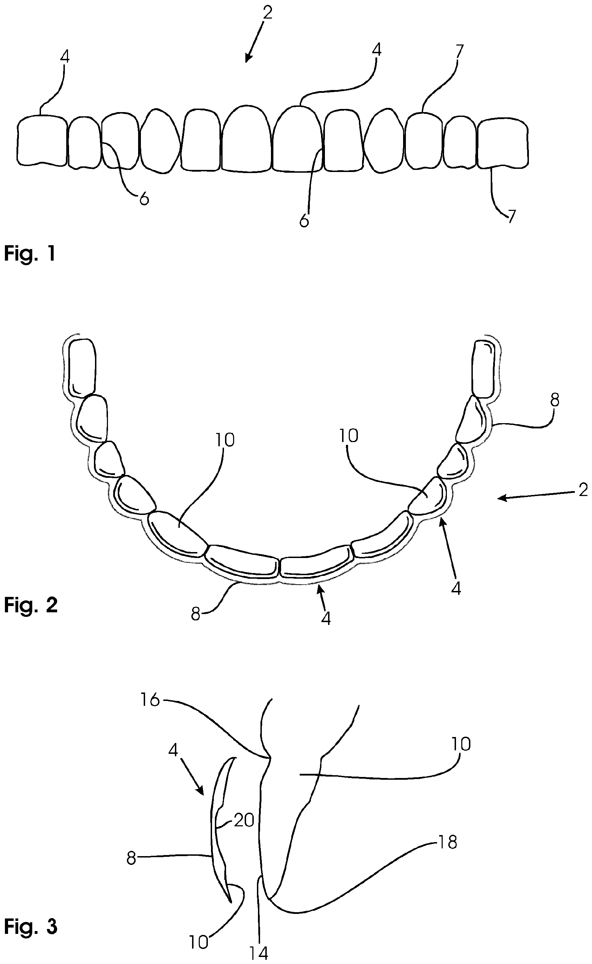

Das Zahnleisten-Veneer 2 gemäß Fig. 1 ist aus Erkodur ® in der Farbgebung A2 hergestellt. Das Zahnleisten-Veneer 2 kann in einer einfachen Ausführung nur zwei aneinander angrenzende Zähne abdecken. Vorliegend weist das Zahnleisten-Veneer 2 eine Folge von zwölf Einzel-Veneers 4 auf, die miteinander an den Seitenkanten 6 verbunden sind und die entsprechend zwölf beim Sprechen oder Lachen sichtbare Zähne des Oberkiefers auf der labialen Oberfläche abdecken. Das Zahnleisten-Veneer 2 weist eine Dicke von 0,5 mm auf. Die Dicke des Zahnleisten-Veneers 2 kann im Bereich der Seitenkanten 6 verringert sein. Ebenso kann die Dicke des Zahnleisten-Veneers 2 im Bereich der Außenkanten 7 des Zahnleisten-Veneers 2 verringert sein, z. B. um einen besonders ästhetischen Übergang zum Zahnfleisch zu gestalten.

Das Zahnleisten-Veneer 2 weist zwölf Einzel-Veneers 4 auf, deren Außenfläche 8, auch als labiale Fläche bezeichnet, bei geöffnetem Mund des Nutzers sichtbar ist, wie Fig. 2 zeigt. Fig. 2 zeigt ein Zahnleisten-Veneer 2, das bogenförmig hergestellt ist, das also die gerundete Stellung der Zähne 10 abbildet und deshalb besonders einfach einzusetzen ist. Die Einzel-Veneers 4 sind an den Seitenkanten 6 miteinander verbunden, so dass der Nutzer zum Abdecken sämtlicher Zähne des Oberkiefers nur ein einziges bandförmiges Zahnleisten-Veneer 2 positionieren muss.

In Fig. 2 ist ein Zahnleisten-Veneer 2 gezeigt, bei dem die Breite der Einzel-Veneers 4 jeweils der Breite der abzudeckenden Zähne entspricht. Die Breite eines oder mehrerer Einzel-Veneers 4 kann jedoch auch abweichend von der Breite eines abzudeckenden Zahns gestaltet werden, z. B. wenn eine Lücke zu überdecken sind oder wenn Zähne von sehr unterschiedlicher Breite nebeneinander stehen.

Fig. 3 zeigt ein auf einen Schneidezahn aufzusetzendes Einzel-Veneer 4 im Schnitt. Das Einzel-Veneer 4 kann optional Bestandteil eines Zahnleisten-Veneers 2 sein. Das Einzel-Veneer 4 weist eine Außenfläche 8 auf, die bei einem auf die Zähne aufgesetzten Zahnleisten-Veneer dann die sichtbare oder labiale Fläche der Zähne bildet. Die gegenüberliegende Hauptfläche des Einzel-Veneers 4 ist die Rückseite12, die dem abzudeckenden Zahn 10 zugewandt ist und die im Gebrauchszustand, also eingesetzt in den Mund des Nutzers, mindestens abschnittsweise an der labialen Fläche 14 des abzudeckenden Zahns 10 anliegt. Das Einzel-Veneer ist so bemessen, dass es sich im eingesetzten Zustand vom Ansatz des Zahnfleisches 16 zum freien Ende 18 des Zahns 10 erstreckt.

Das in Fig. 3 dargestellte Einzel-Veneer 4 mit einer maximalen Stärke von 0,5 mm weist jeweils auf der Rückseite 10 eine Ausnehmung 20 auf. Die Ausnehmung 14 weist eine Tiefe von 0,2mm auf. Sie nimmt ca. 25% der gesamten Fläche des Einzel-Veneers ein und ist mittig auf der labialen Fläche des Veneers angebracht. Die Ausnehmung 20 spart zum einen Material und zum anderen unterstützt sie die Ausbildung einer guten Haftkraft am Zahn durch Ausbilden eines Vakuums, wenn das Einzel-Veneer 4 mit Haftcreme auf der labialen Fläche des Zahns 10 befestigt wird.

Nachfolgend wird das Herstellen eines individuell gefertigten Zahnleisten-Veneers 2 erläutert. Drei Zähne eines Oberkiefers sollen bei einem Nutzer abgedeckt werden: ein erster Zahn ist verfärbt, ein zweiter Zahn ist abgebrochen und ein dritter Zahn steht schief und fluchtet nicht mit den Nachbarzähnen. Diese Zähne grenzen jedoch nicht aneinander an. Der Nutzer stellt selbst einen Abdruck her, indem er ein Kit nutzt, das eine Abdruckform und Abdruckmasse sowie eine Nutzungsanleitung aufweist, zum an sich bekannten Herstellen eines Abdrucks des Oberkiefers benutzt. Die Mitwirkung von zahnkundigem Personal ist dabei nicht erforderlich.

Der Abdruck wird zum Herstellen einer Form genutzt, die den Oberkiefer des Nutzers zeigt. Die Form wird am zweiten Zahn durch Auftragen von Wachs bearbeitet, bis der zweite Zahn die Oberfläche zeigt, die zur Herstellung des Zahnleisten-Veneers geeignet ist. Der dritte Zahn wird ebenfalls durch Auftragen von Wachs so bearbeitet, dass die Oberfläche des dritten Zahns so ausgebildet ist, dass das erfindungsgemäße Zahnleisten-Veneer abgeformt werden kann. Ggf. können an der Form Anpassungen in der Breite der einzelnen Zähne vorgenommen werden, z. B. um Zahnlücken zu überbrücken. Optional werden Erhebungen auf der labialen Fläche der Zähne aufgebracht, die das Ausformen der Ausnehmung 20 auf der Rückseite der zugehörigen Einzel-Veneers 4 ermöglichen.

Es wird auf an sich bekannte Weise unter Verwendung der Form eine Spritzguss-Form hergestellt, die dann mit Erkodur ® in der Farbgebung A2 ausgespritzt wird. Nach dem Entfernen der Form liegt ein bandförmiges Zahnleisten-Veneer 2 vor. Da die Form den natürlichen Zahnbogen des Nutzers abbildet, wird ein gebogenes Zahnleisten-Veneer 2 hergestellt, das sich gut an die Zähne des Oberkiefers des Nutzers anpasst. Das Zahnleisten-Veneer 2 bildet ausschließlich die labilale Oberfläche der Zähne des Oberkiefers ab. Das Zahnleisten-Veneer wird nach dem Herausnehmen aus der Form noch feinbearbeitet durch Schleifen der Kanten und Polieren der labialen Oberfläche bzw. Außenfläche 8.

Alternativ wird das Zahnleisten-Veneer 2 durch Digitalisieren des Abdrucks erfasst, dann digital bearbeitet, um eine Anpassung an das gewünschte Zahnbild zu erreichen und anschließend wird entweder eine Form zum Herstellen des Zahnleisten-Veneers 2 oder unmittelbar das Zahnleisten-Veneer 2 mittels 3-D-Drucker ausgedruckt. Das Drucken des Zahnleisten-Veneers 2 mit einem 3-D-Drucker funktioniert insbesondere wenn Co-Polyester zum Herstellen des Zahnleisten-Veneers verwendet werden.

Das Zahnleisten-Veneer 2 kann auf den bzw. die Zähne aufgeklebt werden. Nach einem eigenständig für jegliche Art von Einzel- oder Zahnleisten-Veneer entwickelten Verfahren wird jedoch auf das Zahnleisten-Veneer 2 eine handelsübliche Haftcreme für Zahnersatz aufgebracht. Das so vorbereitete Zahnleisten-Veneer 2 wird auf die labiale Fläche der Zähne des Oberkiefers des Nutzers aufgesetzt. Alternativ gibt der Nutzer etwas Haftcreme auf die labiale Fläche der Zähne des Oberkiefers und setzt das Zahnleisten-Veneer auf. Es schließt dabei unmittelbar an das Zahnfleisch an, ohne das Zahnfleisch jedoch abzudecken. Überschüssige Haftcreme kann einfach abgewischt werden. Im Bereich des zweiten Zahns ragt das Zahnleisten-Veneer 2 über den abgebrochenen Zahn hinaus, um das gewünschte gleichmäßige Zahnbild zu gewährleisten. Dadurch wirkt das ästhetisch verbesserte Zahnbild besonders natürlich. Das Zahnleisten-Veneer 2 kann einen vollen Tag auf den Zähnen des Oberkiefers verbleiben. Der Nutzer kann mit dem Zahnleisten-Veneer 2 ohne Einschränkung Sprechen, Essen oder Trinken. Zum Entfernen des Zahnleisten-Veneers 2 wird das Veneer von den Zähnen abgehoben oder abgeschoben. Auf den Zähnen verbleibt ggf. noch etwas Haftcreme, die sich durch Spülen mit warmem Wasser oder Zähneputzen entfernen lässt. Das Zahnleisten-Veneer 2 kann auf dieselbe Weise gereinigt werden. Das Zahnleisten-Veneer 2 ist wieder verwendbar. Es kann über Wochen oder Monate verwendet werden.

Nach einer alternativen Ausführung wird ein standardisiertes Zahnleisten-Veneer 2 hergestellt, das ein ästhetisch ansprechendes Zahnbild zeigt, dass aber nicht von einem konkreten, individuellen Abdruck hergestellt ist. Das standardisierte Zahnleisten-Veneer 2 wird mit einem Werkzeug verkauft, mit dem das standardisierte Zahnleisten-Veneer 2 an das Zahnbild eines Nutzers angepasst werden kann, z. B. an der Außenkante zum Zahnfleisch hin. Ein solches standardisiertes Zahnleisten-Veneer 2 ist besonders preiswert.

Nach einer weiter verbesserten Ausführung wird das standardisierte Zahnleisten-Veneer 2 in drei verschiedenen Größen angeboten, jeweils klein, mittel oder groß. Der Nutzer misst den Abstand seiner Eckzähne und prüft, welcher Passbereich (klein, mittel oder groß) für ihn zutreffend ist und wählt so das passende Zahnleisten-Veneer 2 aus. Optional kann der Nutzer das standardisierte, für ihn passende Zahnleisten-Veneer 2 mit Hilfe des der Verpackung beiliegenden Werkzeugs und ggf. unter Berücksichtigung der beiliegenden Empfehlung zum Anpassen des Zahnleisten-Veneers 2 noch nachbearbeiten und so noch besser an die eigenen Zähne anpassen.

## Patentansprüche

1. Zahnleisten-Veneer aus thermoplastischem Kunststoff, **dadurch gekennzeichnet, dass** das Zahnleisten-Veneer (2) eine Folge von mindestens zwei miteinander verbundenen Einzel-Veneers (4) aufweist, die jeweils die labiale Fläche (14) eines einzelnen Zahns (10) abdecken.

2. Zahnleisten-Veneer nach Anspruch 1, **dadurch gekennzeichnet, dass** das Zahnleisten-Veneer(2) unmittelbar an das Zahnfleisch angrenzt.

3. Zahnleisten-Veneer nach mindestens einem der vorangehenden Ansprüche, **dadurch gekennzeichnet, dass** das Zahnleisten-Veneer (2) entsprechend der Zahnstellung eines Kiefers gebogen ist.

4. Zahnleisten-Veneer nach mindestens einem der vorangehenden Ansprüche, **dadurch gekennzeichnet, dass** das Zahnleisten-Veneer (2) auf einer zum Zahn gewandten Seite (10) mit einem Haftmittel versehen ist.

5. Verfahren zum Befestigen eines Veneers mit den Schritten
- Auftragen eines Haftmittels auf den Zahn oder die Innenseite des Veneers
- Aufsetzen des Veneers auf den Zahn.

6. Verfahren nach Anspruch 5, **dadurch gekennzeichnet, dass** ein Einzel-Veneer (4) oder ein Zahnleisten-Veneer (2) mittels Haftcreme befestigt wird.

7. Verfahren zum Herstellen eines Zahnleisten-Veneers (2) mit den Schritten
- Erstellen einer standardisierten oder individuellen Vorlage für ein Zahnleisten-Veneer (2)
- Herstellen einer Form für das Zahnleisten-Veneer durch Abformen der Vorlage oder Digitalisieren der Vorlage zum Herstellen einer Form oder zum Formen des Zahnleisten-Veneers
- Formen des Zahnleisten-Veneers nach der Form oder Drucken des Zahnleisten-Veneers (2) mit einem 3-D-Drucker.

8. Verfahren nach Anspruch 7, **dadurch gekennzeichnet, dass** die Form oder der digitalisierte Zahn-Abdruck formgebend bearbeitet wird.

9. Verfahren nach Anspruch 7 oder 8, **dadurch gekennzeichnet, dass** eine individuelle Vorlage durch Anfertigen eines Zahn-Abdrucks hergestellt wird.

10. Verfahren nach mindestens einem der Ansprüche 7 bis 9, **dadurch gekennzeichnet, dass** der Zahn-Abdruck für das Zahnleisten-Veneer mittels eines Zahn-Abdruck-Kits von einem Patienten selbst hergestellt wird.

11. Verpackungseinheit, aufweisend ein standardisiertes Zahnleisten-Veneer (2) und ein Werkzeug zum bearbeiten des Zahnleisten-Veneers (2).

12. Verpackungseinheit zum Herstellen eines Zahnleisten-Abdrucks, aufweisend eine Abdruck-Form und Abdruckmasse.
